# EUROPEAN PATENT SPECIFICATION

(11) **EP 2 219 062 B1**
(45) Date of publication and mention of the grant of the patent: **18.04.2012**
(21) Application number: 08853766.7
(22) Date of filing: 25.11.2008
(51) Int. Cl.: G02B 7/04, H04N 5/225, G03B 3/10

(54) **DRIVING MODULE AND ELECTRONIC APPARATUS PROVIDED WITH THE SAME**
ANTRIEBSMODUL UND ELEKTRONISCHE VORRICHTUNG DAMIT
MODULE D'EXCITATION ET APPAREIL ÉLECTRONIQUE COMPRENANT CE DERNIER

(30) Priority: 27.11.2007 JP 2007305338
(43) Date of publication of application: 18.08.2010
(73) Proprietor: Seiko Instruments Inc., Chiba-shi Chiba 261-8507 (JP)
(72) Inventor: KUME, Akira, Chiba-shi Chiba 261-8507 (JP)
(74) Representative: Cloughley, Peter Andrew
(86) International application number: PCT/JP2008/071288
(87) International publication number: WO 2009/069569

(56) References cited:
- WO-A1-2007/113478
- JP-A- 2 066 741
- JP-A- 3 007 919
- JP-A- 2000 193 030
- JP-A- 2006 101 650
- JP-A- 2006 227 103
- JP-A- 2006 337 918
- JP-A- 2007 078 748
- JP-A- 2007 155 801
- JP-A- 2007 292 864
- JP-A- 2008 039 381
- JP-A- 2008 052 196
- JP-A- 2008 178 206

## Description

### Technical Field

The present invention relates to a driving module and an electronic apparatus provided with the same. For example, the present invention relates to a driving module, which is suited for adjusting a focal position by driving an optical system or a mobile member or for being used as an actuator, and relates to an electronic apparatus provided with the driving module.

### Background Art

Conventionally, for example, in small electronic apparatuses such as mobile phones with cameras, various types of driving modules for driving a body to be driven such as a photographing lens unit have been used.

As such a driving module, for example, Patent Document 1 describes an autofocus device whose both ends in an axial direction are sandwiched by a holder spring while a lens holder holding a focus lens in an inner circumferential portion and having a driving coil attached to an outer circumferential portion is inserted in an annular magnet.

Patent Document 1: JP 2005-173431 A
Patent Document WO 2007/113 478 discloses a driving module having the features set forth in the preamble of claim 1.

### Disclosure of the Invention

### Problems to be solved by the Invention

In the autofocus device described in Patent Document 1, the holder spring connects an inside ring to an outside ring with a connecting spring, the inside ring is attached to the lens holder that is a body to be driven, and the outside ring is attached to a ring-shaped magnet via a ring-shaped spacer. Patent Document 1 does not describe an attachment method, and no fixing means is illustrated in the figures. Thus, adhesion with an adhesive is considered to be used from the technical common sense.

In the case of adhering the holder spring made of metal to the lens holder and the magnet, there is a problem in that high reliability cannot be obtained in terms of adhesive strength because the lens holder and the magnet to which the holder spring is adhered are made of different materials. Further, in the case where the adhered portion receives impact force caused by dropping or the like, there is a problem in that the adhered portion is likely to be damaged. Further, even if such peeling does not occur in the adhered portion that the holder spring does not peel off, when even a part of the adhered portion is degraded, a spring constant changes. Therefore, elastic restoring force changes, and there is a fear that precise driving may not be performed.

On the other hand, for example, in the case of adopting a fixing method such as screwing or caulking so as to increase fixing strength, there is a problem in that a large space for fixing is required compared with a space for adhesion.

The present invention is dedicated for solving the conventional problems, and it is an object of the present invention to provide a driving module that can reduce the risks of breakage and failures due to impact force caused by dropping or the like and can be miniaturized, and an electronic apparatus provided with the driving module.

### Means for solving the Problems

In order to achieve the above-mentioned object, in the invention according to claim 1, a driving module includes: a cylindrical or columnar body to be driven; a cylindrical support housing the body to be driven in an inside thereof; a plate spring member that holds elastically the body to be driven with respect to the support so that the body to be driven is movable in a predetermined direction; and driving means for driving the body to be driven in the predetermined direction against a biasing force of the plate spring member, in which: the body to be driven is provided with, in a cylinder end portion or a column end portion of the body to be driven in a circumferential direction, a plurality of first plate spring fixing portions that sandwich the plate spring member with the body to be driven so as to fix the plate spring member to the body to be driven; the support is provided with, in a cylinder end portion of the support in the circumferential direction, a plurality of second plate spring fixing portions that sandwich the plate spring member with the support so as to fix the plate spring member to the support; and the first plate spring fixing portions and the second plate spring fixing portions are placed while angular positions in the circumferential direction with respect to a center axis of the body to be driven are shifted on a plane orthogonal to the center axis.

According to the present invention, the first plate spring fixing porti ons that fix the plate spring member by sandwiching the plate spring member with the cylinder end portion or the column end portion of the body to be driven and the second plate spring fixing portions that fix the plate spring member by sandwiching the plate spring member with the cylinder end portion of the support are placed while the angular positions in the circumferential direction with respect to the center axis are shifted on the plane orthogonal to the center axis of the body to be driven. Therefore, compared with the case where the first and second plate spring fixing portions are placed on a straight line directed from the center axis of the body to be driven to the outside in a radial direction, the positions in the radial direction of the first and second plate spring fixing portions can be made close to each other, and a large space required for screwing and caulking can be ensured.

In the invention according to claim 2, in the driving module according to claim 1, a cylinder outer circumferential portion of the support is formed in a polygonal shape, and each of the second plate spring fixing portions is provided in a corner of a polygon of the support.

According to the present invention, each of the second plate spring fixing portions is provided at the corner of the polygon of the cylinder outer circumferential portion of the support. Therefore, in the case where the support is formed in a polygonal shape, the protrusion amount of the outer shape for providing the second plate spring fixing portions can be suppressed.

Further, in the case of forming the outer shape of the plate spring member along the end shape of the support, the outer shape is formed in accordance with the shape of the corner of the polygon of the cylinder outer circumferential portion of the support, and the portion to be fixed can be provided at the corner of the plate spring member having a space with a distance from the arc-shaped plate spring portion on the inner circumferential side. Therefore, the production of the plate spring member by precise punching and the production by etching are facilitated.

In the invention according to claim 3, in the driving module according to claim 2, the driving means includes a shape memory alloy wire that is stretched across the cylinder outer circumferential portion of the support and drives the body to be driven against the biasing force of the plate spring member, and the body to be driven includes a protrusion that locks the shape memory alloy wire. The support is provided with a protrusion insertion portion that allows the protrusion to be inserted in the corner of the polygon in a radial direction and to move in the predetermined direction, and each of the second plate spring fixing portions in the corner in which the protrusion insertion portion is formed is placed adjacent to the protrusion insertion portion in the circumferential direction.

According to the present invention, the protrusion of the body to be driven, which is to be housed in the inside of the support, is inserted in the cut-away portion of the support, and locked with the shape memory alloy wire stretched across the cylinder outer circumferential portion of the support, whereby the body to be driven can be driven in the axial direction of the center axis of the body to be driven with the contraction force of the shape memory alloy wire and the biasing force from the plate spring member. At this time, the protrusion insertion portion of the support, i.e. , the position of the protrusion of the body to be driven corresponds to the corner of the polygon of the support. Therefore, the shape memory alloy wire can be stretched along the polygon side surface of the support, and the shape memory alloy wire can be placed easily.

Further, each of the second plate spring fixing portions at the corner in which the protrusion insertion portion is formed is placed adjacent to the protrusion insertion portion in the circumferential direction, and hence, the protrusion insertion portion can be formed in a cut-away shape opening on one side in the axial direction of the inner circumferential portion of the support. Therefore, the configuration of the support can be simplified, which makes the assembly of the driving module easy.

Further, in the case of using the plate spring member with the outer shape of a polygon in accordance with the shape of the cylinder end portion of the support, the corner of the plate spring member becomes the portion to be fixed, and hence, the plate spring member can be fixed stably.

In the invention according to claim 4, in the driving module according to any one of claims 1 to 3, the body to be driven includes a convex portion that protrudes in the radial direction in an outer circumferential portion of a cylindrical or columnar main part of the body to be driven, and each of the first plate spring fixing portions is formed on an end side of the convex portion.

According to the present invention, each of the first plate spring fixing portions is provided on the end side of the convex portion protruding in the radial direction in the outer circumferential portion of the cylindrical or columnar main part of the body to be driven. Therefore, when the body to be driven is housed in the support, the support and the body to be driven can intrude into each other in the radial direction, and the shape engaged with each other in the intruded portion can be provided. Therefore, a space in the circumferential direction adjacent to the convex portion can be used effectively.

In the invention according to claim 5, in the driving module according to any one of claims 1 to 4, an inner circumferential surface of the support is provided with a position regulating portion that regulates a movement range of the body to be driven in the predetermined direction, and the outer circumferential portion of the body to be driven is provided with a portion whose position is to be regulated, and which is placed so as to abut against the position regulating portion of the support.

According to the present invention, the portion whose position is to be regulated of the body to be driven abuts against the position regulating portion of the support in the predetermined direction, whereby the movement range of the body to be driven is regulated. Therefore, for example, even at an abnormal time such as dropping, the movement range of the body to be driven can be regulated to an appropriate range, for example, the range avoiding the collision with other members.

The position regulating portion is provided on an inner side of the support, and hence the outer shape of the support and the length of the driving direction are not required to increase. Thus, the miniaturization can be achieved.

In the case of using the plate spring member for the driving means, the movement range can be regulated to the range corresponding to the deformation limit of the plate spring member.

In the invention according to claim 6, in the driving module according to claim 5, the position regulating portion of the support is provided on an inner side in the radial direction with respect to the second plate spring fixing portions, and the portion whose position is to be regulated of the body to be driven is formed at a position adjacent to each of the first plate spring fixing portions in the circumferential direction.

According to the present invention, the position regulating portion is provided on the inner side in the radial direction with respect to the second plate spring fixing portions, and the portion whose position is to be regulated is provided at the position adjacent to each of the first plate spring fixing portions in the circumferential direction. Therefore, the position regulating portion and the portion whose position is to be regulated are provided so as to abut against each other at the position adjacent to each of the first plate spring fixing portions in the circumferential direction. Therefore, the space adjacent to each of the first plate spring fixing portions in the circumferential direction can be used efficiently.

In the invention according to claim 7, the driving module according to any one of claims 1 to 6 includes a cover member that covers the support at least on the second plate spring fixing portions, in which the cover member is provided with a run-off in a concave shape in a plate thickness range of the cover member at a position opposed to each of the second plate spring fixing portions.

According to the present invention, the run-off provided in the cover member can prevent the collision between the second plate spring fixing portions and the cover member without allowing the outer surface of the cover member from protruding in the plate thickness direction.

In the invention according to claim 8, an electronic apparatus includes the driving module according to any one of claims 1 to 7.

According to the present invention, due to the presence of the driving module according to any one of claims 1 to 7, the function similar to that of the invention according to any one of claims 1 to 7 is provided.

### Brief Description of the Drawings

[FIG. 1] A schematic perspective view illustrating an attachment state of a driving module according to Embodiment 1 of the present invention with respect to a substrate.
[FIG. 2] An exploded perspective view illustrating a schematic configuration of the driving module according to Embodiment 1 of the present invention.
[FIG. 3] A schematic perspective view illustrating an internal configuration of an assembled state of the driving module according to Embodiment 1 of the present invention.
[FIG. 4] A cross-sectional view taken along the line A-A in FIG. 3.
[FIGS. 5(a) and (b)] A cross-sectional view taken along the line B-B in FIG. 3, and a cross-sectional view taken along the line B-B in FIG. 3 at a time of movement of a body to be driven.
[FIGS. 6 (a) and (b) ] A perspective view of the body to be driven used in the driving module according to Embodiment 1 of the present invention and a plan view seen from the arrow C.
[FIGS. 7 (a) and (b)] A perspective view of a support used in the driving module according to Embodiment 1 of the present invention and a back view seen from the arrow D.
[FIG. 8] A plan view of a plate spring member used in the driving module according to Embodiment 1 of the present invention.
[FIGS. 9(a) and (b)] A plan view of a plate member used in the driving module according to Embodiment 1 of the present invention and a front view thereof.
[FIG. 10] A back view seen from the arrow E in FIG. 9 (b) .
[FIG. 11] A plan view of a feeding member used in the driving module according to Embodiment 1 of the present invention.
[FIG. 12] A back view of a cover used in the driving module according to Embodiment 1 of the present invention.
[FIG. 13] A schematic cross-sectional view illustrating a configuration of a driving module according to a modification of Embodiment 1 of the present invention.
[FIGS. 14(a) to (c)] External perspective views of a front surface and a back surface of an electronic apparatus according to Embodiment 2 of the present invention, and a cross-sectional view taken along the line F-F.

### Best Mode for carrying out the Invention

Hereinafter, embodiments of the present invention are described with reference to the attached drawings. In all the figures, the same or corresponding members are denoted with the same reference symbols and the repeated description is omitted, even in the case where embodiments are different.

### [Embodiment 1]

A driving module according to Embodiment 1 of the present invention is described.

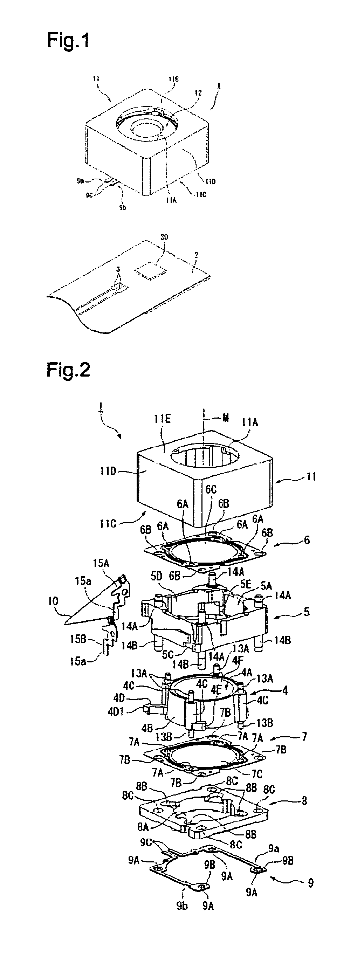

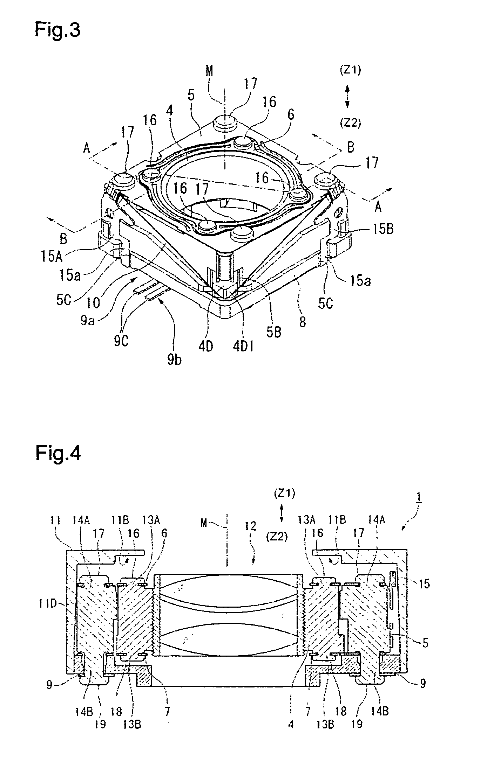

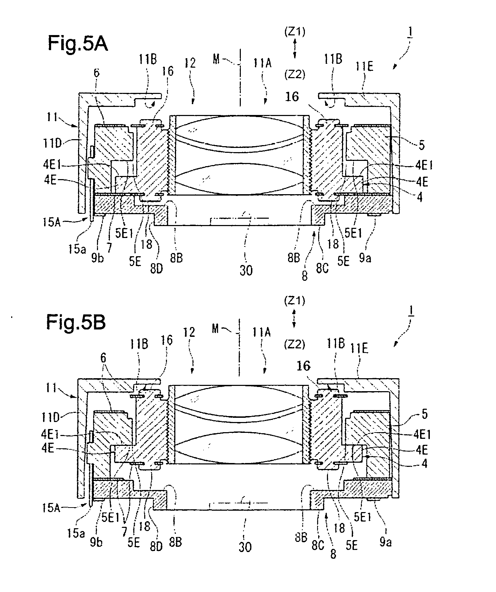

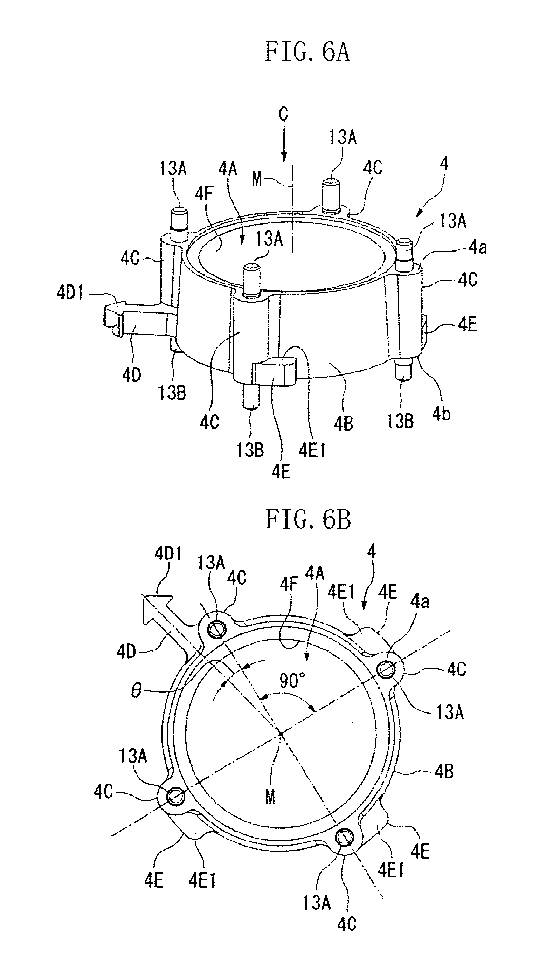

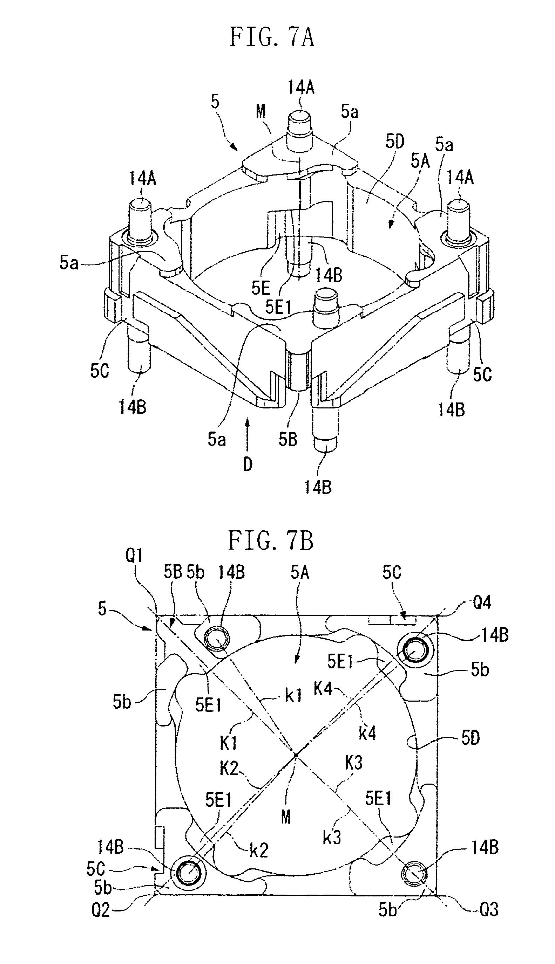

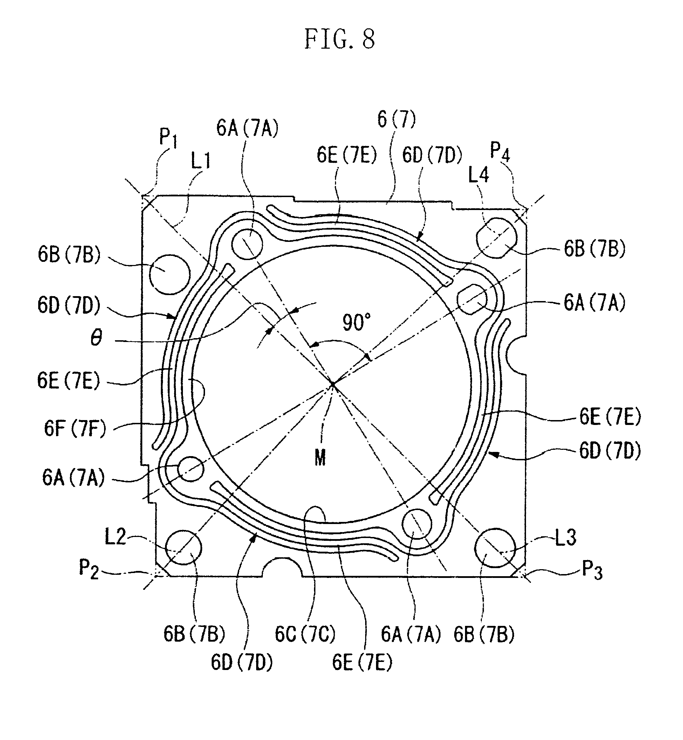

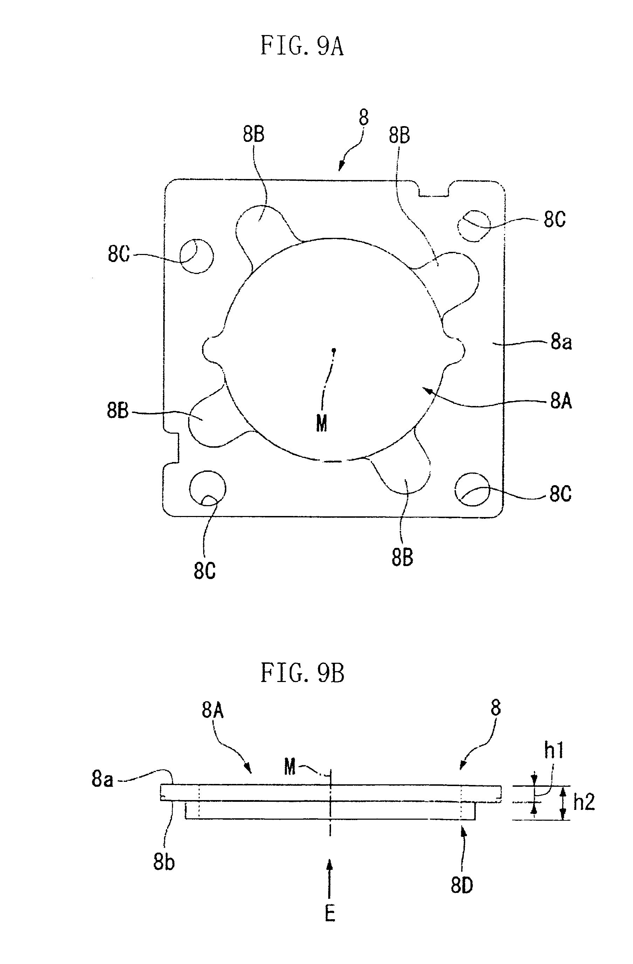

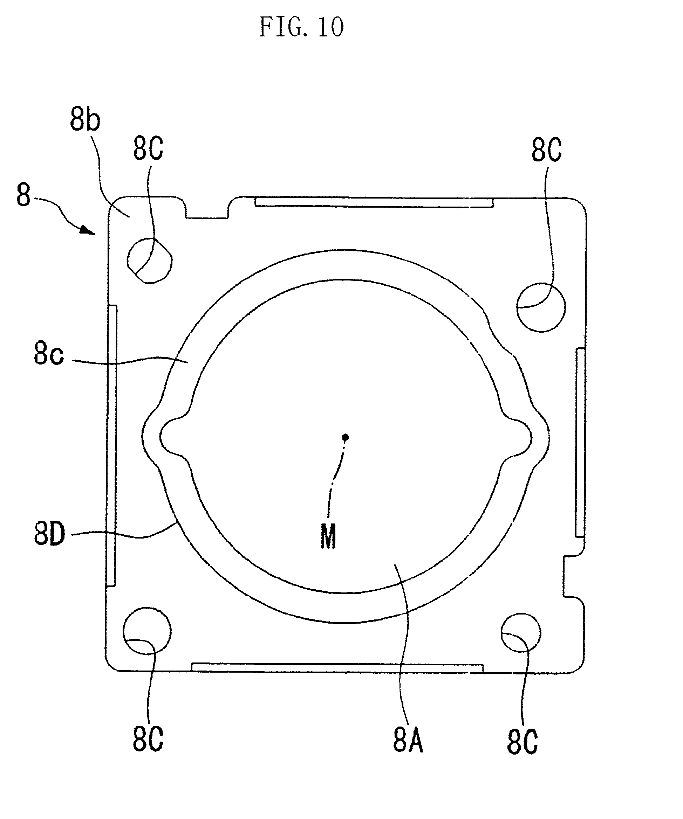

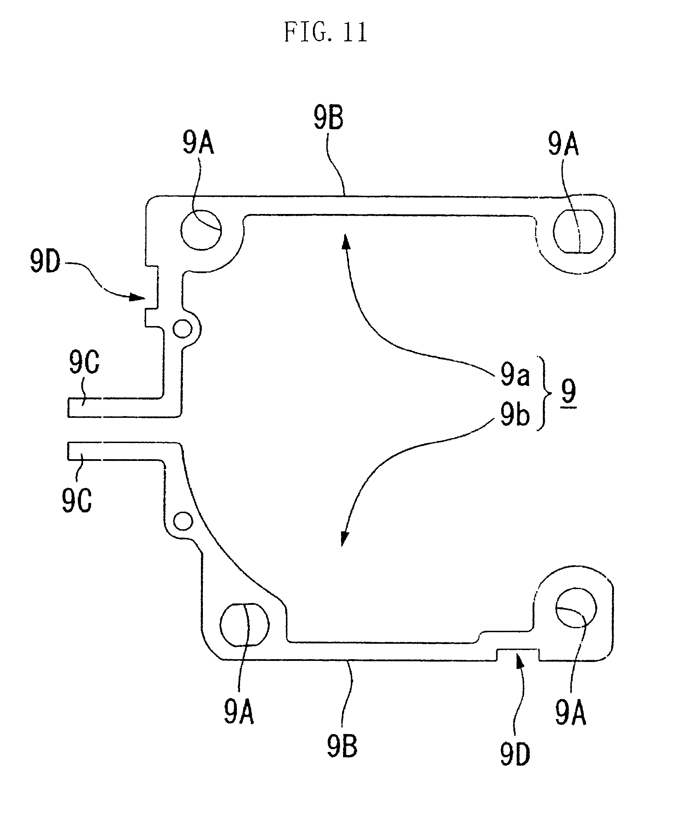

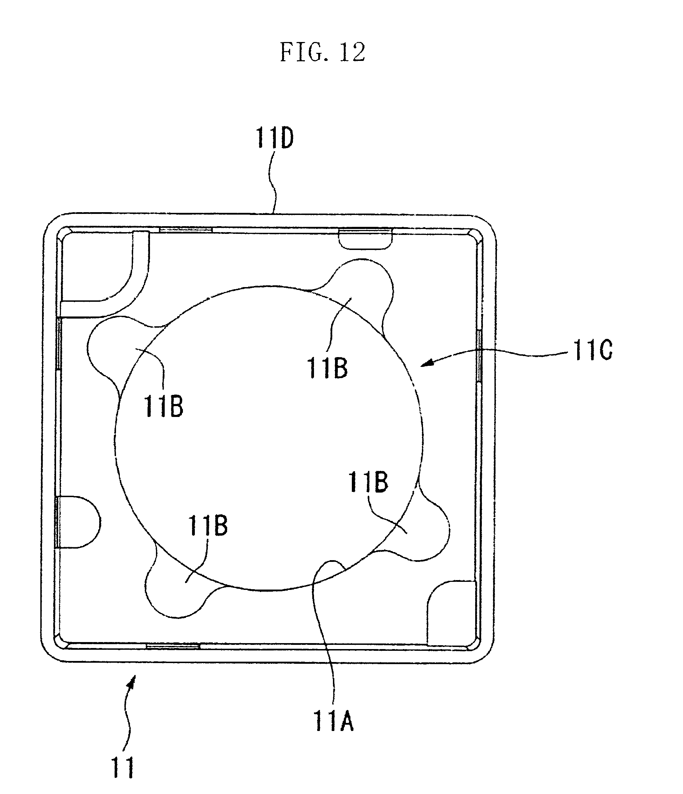

FIG. 1 is a schematic perspective view illustrating an attachment state of a driving module according to Embodiment 1 of the present invention with respect to a substrate. FIG. 2 is an exploded perspective view illustrating a schematic configuration of the driving module according to Embodiment 1 of the present invention. FIG. 3 is a schematic perspective view illustrating an internal configuration of an assembled state of the driving module according to Embodiment 1 of the present invention. FIG. 4 is a cross-sectional view taken along the line A-A in FIG. 3. FIG. 5 (a) is a cross-sectional view taken along the line B-B in FIG. 3. FIG. 5(b) is a cross-sectional view taken along the line B-B in FIG. 3 at a time of movement of a body to be driven. FIG. 6(a) is a perspective view of the body to be driven used in the driving module according to Embodiment 1 of the present invention. FIG. 6(b) is a plan view seen from the arrow C in FIG. 6(a). FIG. 7(a) is a perspective view of a support used in the driving module according to Embodiment 1 of the present invention. FIG. 7(b) is a back view seen from the arrow D in FIG. 7(a). FIG. 8 is a plan view of a plate spring member used in the driving module according to Embodiment 1 of the present invention. FIGS. 9(a) and (b) are a plan view of a plate member used in the driving module according to Embodiment 1 of the present invention and a front view thereof, respectively. FIG. 10 is a back view seen from the arrow E in FIG. 9(b). FIG. 11 is a plan view of a feeding member used in the driving module according to Embodiment 1 of the present invention. FIG. 12 is a back view of a cover used in the driving module according to Embodiment 1 of the present invention.

In a part of the drawings, for ease of seeing, components such as the lens unit 12 are omitted appropriately.

The driving module of this embodiment is formed in a box shape as a whole as illustrated in FIG. 1. The driving module 1 in an assembled state is provided in an electronic apparatus or the like and is fitted onto or adhered to a substrate 2 supplying a control signal and power to the driving module 1, whereby the driving module 1 can be fixed.

On an upper surface of the substrate 2, there are provided a pair of land portions 3 connected to a feeding member of the driving module 1 described later so as to supply power and an image pickup element 30.

As illustrated in FIG. 2, the driving module 1 includes, as main components, a lens frame 4 to be a body to be driven, a module frame 5 to be a support, an upper plate spring 6 and a lower plate spring 7 to be plate spring members, a module lower plate 8, a feeding member 9, a shape memory alloy (hereinafter, abbreviated as an SMA) wire 10, and a cover 11 (cover member), and those components are stacked integrally to constitute one actuator.

In the assembled state of those members, as illustrated in FIGS. 3 and 4, the lens frame 4 is inserted in the module frame 5; the upper plate spring 6 and the lower plate spring 7 are fixed by caulking while sandwiching the lens frame 4 and the module frame 5 in an up-and-down direction in the figure; the module lower plate 8 and the feeding member 9 are stacked in this order from the lower side in the figure and fixed respectively by caulking from a lower side of the module frame 5; and a cover 11 covering those laminates from an upper side is fixed to the module lower plate 8.

A symbol M in the figure denotes a virtual axis of the driving module 1 matched with the optical axis of the lens unit 12, and indicates the driving direction of the lens frame 4. In the following, for simplicity of the description, even in the description of exploded components, the position and direction may be referred to based on the positional relationship with the axis M at a time of assembly. For example, even in the case where a clear circle and cylindrical surface are not present in the components, as long as there is no fear of misunderstanding, the direction along the axis M may be referred to merely as an axial direction, and a radial direction and a circumferential direction of a circle with respect to the axis M may be referred to merely as a radial direction and a circumferential direction.

Further, the up-and-down direction refers to an up-and-down direction in the arrangement in the case where the axis M is placed in a vertical direction and the attachment surface of the driving module 1 is placed on a lower side of the vertical direction, unless otherwise specified.

Among the components, the lens frame 4 to be the body to be driven is formed in a tubular shape as a whole as illustrated in FIG. 2 and 6(a), and a female screw is formed on an inner circumferential surface 4F of a housing portion 4A (main body of the body to be driven) in a tubular shape, which passes through the center of the lens frame 4 and is formed coaxially with the axis M. Then, the lens unit 12 holding an appropriate lens or lens group on a lens barrel with a male screw formed on an outer circumferential portion (see FIGS. 4 and 5) can be screwed to be fixed to the housing portion 4A.

On an outer wall surface 4B of the lens frame 4, protrusions 4C (convex portion) protruding outward in a radial direction are provided so as to extend in the axial direction at an interval of 90° in a circumferential direction, and in upper ends and lower ends of the respective protrusions 4C, on end surfaces 4a, 4b formed of planes orthogonal to the axis M, four upper-side fixing pins 13A (first fixing pin portions) and lower-side fixing pins 13B (first fixing pin portions), which respectively protrude upward and downward along the axis M are provided, respectively.

The upper-side fixing pins 13A hold the upper plate spring 6, and the lower-side fixing pins 13B hold the lower plate spring 7.

Although the positions of the upper-side fixing pins 13A and the lower-side fixing pins 13B in a planar view may be different from each other, they are placed at coaxial positions parallel to the axis M in this embodiment. Therefore, the upper-side fixing pins 13A and the lower-side fixing pins 13B at the upper plate spring 6 and the lower plate spring 7 have insertion positions in common.

Further, although the respective center positions in the radial direction of the upper-side fixing pins 13A and the lower-side fixing pins 13B may be different, they are placed on the same circumference in this embodiment. Therefore, the respective center positions are placed in a tetragonal lattice shape.

On the outer side in the radial direction of the lens frame 4, a guide protrusion 4D (protrusion portion) is provided so as to protrude outward in the radial direction from the lower end side of one protrusion 4C. The protruding direction of the guide protrusion 4D is set at a positional relationship shifted by an angle θ (where θ is an acute angle) from an integral multiple of 90° from the angular position in the circumferential direction of each upper-side fixing pin 13A and each lower-side fixing pin 13B with respect to the axis M. More specifically, when the guide protrusion 4D is placed along a diagonal line of a square, each upper-side fixing pin 13A and each lower-side fixing pin 13B are placed at a position shifted by a predetermined angle θ from a diagonal line of a square.

As illustrated in FIG. 3, the guide protrusions 4D locks the SMA wire 10 to a tip end key portion 4D1 thereof, and the guide protrusion 4D is lifted upward (direction indicated by the arrow (Z1)) to be moved due to the contraction of the SMA wire 10.

Further, as illustrated in FIGS. 2, 6(a), and 6(b), positioning portions 4E in protrusion shapes are provided so as to extend in a circumferential direction from a side portion of each protrusion 4C along a lower portion of the outer wall surface 4B of the lens frame 4.

Each of the positioning portions 4E has a smooth positioning surface 4E1 on an upper surface thereof, and the position in the axial direction of the positioning surface 4E1 is set at a position where positioning portion 4E abuts against a positioning reception portion 5E of the module frame 5 described later (see FIG. 5(b)) when the lens frame 4 tries to move along the axis M upward (direction indicated by the arrow (Z1)) by a distance equal to or longer than a predetermined distance.

Further, in this embodiment, the lens frame 4 is molded integrally with a thermoplastic resin capable of being caulked with heat or ultrasonic wave, such as a polycarbonate (PC) or a liquid crystal polymer (LCP) resin.

As illustrated in FIGS. 2, 7(a), and 7(b), the module frame 5 is a tubular member whose outer shape in a planar view is formed in a substantially rectangular shape as a whole, and in which a housing portion 5A formed of a through-hole is formed coaxially with the axis M in the center portion thereof. The lens frame 4 is housed in the housing portion 5A.

At upper and lower four corners of the module frame 5, there are formed end surfaces 5a, 5b formed of planes orthogonal to the axis M. Four upper-side fixing pins 14A (second fixing pin portions) are provided upward from the end surfaces 5a, and four lower-side fixing pins 14B (second fixing pin portions) are provided downward from the end surfaces 5b.

The upper-side fixing pins 14A hold the upper plate spring 6, and the lower-side fixing pins 14B hold the lower plate spring 7, the module lower plate 8, and the feeding member 9.

The distance between the end surfaces 5a, 5b is set to the same distance as that between the end surfaces 4a, 4b of the lens frame 4.

In a lower portion at one corner of the module frame 5, there is formed a cut-away portion 5B (protrusion inserting portion) whose groove width in a planar view has a size that is fitted with the guide protrusion 4D of the lens frame 4 so as to move in the axial direction. The cut-away portion 5B allows the guide protrusion 4D of the lens frame 4 to pass through while the lens frame 4 is inserted to be housed in the module frame 5 from a lower side, allows the tip end key portion 4D1 of the guide protrusion 4D to protrude outward in the radial direction of the module frame 5, and determines the position of the lens frame 4 in the circumferential direction.

In this embodiment, the cut-away portion 5B is provided at such a position, and hence, as illustrated in FIG. 7(b), the lower-side fixing pin 14B in the vicinity of the cut-away portion 5B is formed at a position away from a line connecting the axis M to an intersection of the corners of the outer shape avoiding the cut-away portion 5B. More specifically, the lower-side fixing pin 14B is provided adjacent to the cut-away portion 5B in the circumferential direction.

In contrast, the other three lower-side fixing pins 14B are respectively provided on a line connecting the axis M to the intersection of the corners of the outer shape, and are placed forming an L-shape along the outer shape of the module frame 5. Thus, four lower-side fixing pins 14B are placed at positions asymmetrical to each other in a planar view.

Meanwhile, although the positions of the upper-side fixing pins 14A and the lower-side fixing pins 14B in a planar view may be different from each other, they are placed at coaxial positions parallel to the axis M in this embodiment, respectively. Therefore, the upper-side fixing pins 14A and the lower-side fixing pins 14B at the upper plate spring 6 and the lower plate spring 7 have insertion positions in common.

As illustrated in FIG. 7(b), assuming that intersections on side surfaces of the module frame 5 are indicated by Q1, Q2, Q3, and Q4 in a planar view, the axis center of each upper-side fixing pin 14A and each lower-side fixing pin 14B are placed respectively in the vicinity of the points Q1, Q2, Q3, and Q4, and on or in the vicinity of line segments K1, K2, K3, and K4 connecting the points Q1, Q2, Q3, Q4 to the axis M. More specifically, the line segments k1, k2, k3, and k4 connecting the axis center of each upper-side fixing pin 14A and each lower-side fixing pin 14B to the axis M overlap the line segments K1, K2, K3, and K4, or cross them at a small angle of about 30° or less.

As illustrated in FIG. 7(a), at two corners adjacent to the cut-away portion 5B of the module frame 5, there is provided a pair of locking grooves 5C for attaching the wire holding members 15A, 15B for holding the SMA wire 10 (see FIGS. 2 and 3) on a side surface on the side in the same direction as that of the corner at which the cut-away portion 5B. In this embodiment, the wire holding member 15A is provided on a side surface on the side from which a pair of terminal portions 9C of the feeding member 9 protrude from the driving module 1, and the wire holding member 15B is provided on a side surface on the side from which a pair of terminal portions 9C of the feeding member 9 do not protrude from the driving module 1.

The wire holding members 15A, 15B are conductive members made of a metal plate or the like formed in a key shape, obtained by caulking the ends of the SMA wire 10 onto the ends of the wire holding members 15A, 15B, and the wire holding members 15A, 15B are fitted in the locking grooves 5C from the side, thereby holding the ends of the SMA wire 10 while positioning the SMA wire 10.

The wire holding members 15A, 15B have chip-shaped terminal portions 15a on a side opposite to the caulking position of the SMA wire 10, as illustrated in FIG. 3, and under the attached state with respect to the module frame 5, the terminal portions 15a are allowed to protrude slightly downward from the module lower plate 8 stacked on the lower side of the module frame 5.

Further, the SMA wire 10 whose both ends are held by a pair of wire holding members 15A, 15B is locked from a lower side to the tip end key portion 4D1 of the guide protrusion 4D of the lens frame 4 protruding from the cut-away portion 5B of the module frame, and biases the lens frame 4 upward via the tip end key portion 4D1 due to the tension of the SMA wire.

In the housing portion 5A of the module frame 5, as illustrated in FIGS. 7(a), 7(b), the positioning reception portion 5E that is a concave formed from the inner wall surface 5D to the outer side in the radial direction and extending from the lower end side to the intermediate portion on the upper end side in the axial direction is formed in such a shape as to allow each positioning portion 4E of the lens frame 4 to be inserted from a lower side.

The positioning reception portion 5E has a receiving surface 5E1 capable of allowing the positioning surface 4E1 of the positioning portion 4E to abut against the positioning reception portion on a lower side in the axial direction. Thus, as illustrated in FIG. 5(b), when the lens frame 4 moves upward (direction indicated by an arrow (Z1)) along the axis M by a predetermined distance, the receiving surface 5E1 of each positioning reception portion 5E abuts against the positioning surface 4E1 of each positioning portion 4E. Therefore, the upward movement of the lens frame 4 is regulated. More specifically, the positioning reception portion 5E constitutes a position regulating portion that regulates the movement range of the lens frame 4, and the positioning portion 4E constitutes a portion whose position is to be regulated, provided so as to abut against the position regulating portion of the module frame 5.

In this embodiment, the position in a planar view where the positioning reception portion 5E is formed is provided at positions crossing the line segments K1, K2, K3, and K4 directed from the center (axis M) of the housing portion 5A to the corners of the rectangular outer shape of the module frame 5, as illustrated in FIG. 7(b).

Due to such a configuration, even when large shock is applied to the driving module from outside, for example, the driving module is dropped, the lens frame 4 cannot move upward in the figure, exceeding the position of the receiving surface 5E1 of the positioning reception portion 5E1.

In this embodiment, such a regulating position is set in such a manner that the lens frame 4 does not bump against the cover 11, and the deformation of the upper plate spring 6 and the lower plate spring 7 is equal to or less than, for example, a deformation limit such as an elastic limit.

The positioning reception portions 5E are provided at positions crossing the line segments K1, K2, K3, and K4 directed from the center of the housing portion 5A to the corners of the rectangular outer shape of the module frame 5, and hence a region in a radial direction can be effectively used in the corners of the rectangular outer shape protruding from the housing portion 5A to the outer side in the radial direction in the module frame 5.

Therefore, even if the positioning reception portions 5E are provided on an inner side of the module frame 5, the outer shape of the module frame 5 can be prevented from being increased, which enables miniaturization and reduction in weight.

Further, in this embodiment, the module frame 5 is integrally molded with a thermoplastic resin capable of being caulked with heat or an ultrasonic wave, such as a polycarbonate (PC) or a liquid crystal polymer (LCP) resin in the same way as in the lens frame 4.

On each upper portion and each lower portion of the module frame 5 and the lens frame 4 inserted therein, as illustrated in FIG. 4, the upper plate spring 6 and the lower plate spring 7 are stacked respectively.

In this embodiment, as illustrated in FIG. 8, the upper plate spring 6 and the lower plate spring 7 are plate spring members in a plate shape punched into the same shape, and are formed of, for example, a metal plate having a spring property such as stainless (SUS) steel plate.

As illustrated in FIG. 8, the outer shape in a planar view of the upper spring 6 (lower spring 7) is a substantially rectangular shape similar to that of an end on an upper side (lover side) of the module frame 5, and a circular opening 6C (7C) that is slightly larger than the inner circumferential surface 4F of the lens frame 4 and is coaxial with the axis M is formed at the center, whereby the upper plate spring 6 (lower plate spring 7) is formed in a ring shape as a whole.

At three corners and in the vicinity of one corner of the upper plate spring 6 (lower plate spring 7), four through-holes 6B (7B) in which the upper-side fixing pins 14A (lower-side fixing pins 14B) can be inserted respectively are provided correspondingly to the arrangement positions of the upper-side fixing pins 14A (lower-side fixing pins 14B) formed at the corners and in the vicinity of one corner of the module frame 5. In this embodiment, of the through-holes 6B (7B) in which the upper-side fixing pins 14A (lower-side fixing pins 14B) formed at the corners corresponding to the points Q2, Q4 are inserted in FIG 7(b), one is formed in a standard circular hole and the other is formed in an oval hole, which enables the positioning in a plane orthogonal to the axis M with respect to the module frame 5.

Further, on the upper plate spring 6 (lower plate spring 7), four through-holes 6A (7A) in which the upper-side fixing pins 13A (lower-side fixing pins 13B) can be inserted respectively are provided correspondingly to the arrangement position of the upper-side fixing pins 13A (lower-side fixing pins 13B) formed on the lens frame 4.

More specifically, in this embodiment, each through-hole 6A (7A) is formed at a position shifted by an angle θ from an integral multiple of 90° with respect to a straight line L1 corresponding to the line segment K1 in FIG. 7(b).

In this embodiment, by setting the angle θ to be an appropriate value in such an arrangement, the respective arrangement positions of the through-hole 6A (7A) and the through-hole 6B (7B) can be set in such a manner that the difference between the diameter of a circle with respect to the axis M at which the through-hole 6A (7A) is positioned and the diameter of a circle with respect to the axis M at which the through-hole 6B (7B) is positioned becomes smaller than that in the case where the through-hole 6A (7A) and the through-hole 6B (7B) are placed so that the angle θ becomes 0°.

Further, a ring portion 6F (7F) is formed on an outer side in a radial direction of the opening 6C (7C), and four slits 6D (7D) extending in a substantially semi-arc shape in a circumferential direction from positions in the vicinity of the through-holes 6A (7A) opposed to each other in a diagonal direction with the axis M interposed therebetween are formed in a state where they overlap each other in a radial direction by a substantially quadrant arc.

Thus, a plate spring member is formed in which four spring portions 6E (7E) extending in a substantially quadrant arc shape from the rectangular frame on the outer side of the upper plate spring 6 (lower plate spring 7) extend to the vicinity of the through-holes 6A (7A) one by one.

As described above, in this embodiment, the outer shape of the upper plate spring 6 (lower plate spring 7) is provided in a rectangular shape substantially matched with the outer shape of the module frame 5, and the spring portion 6E (7E) and the ring portion 6F (7F) are formed in a ring-shaped region along the opening 6C (7C). Then, the through-holes 6B (7B) that are portions to be fixed are provided at corners with a space in accordance with the arrangement of the upper-side fixing pins 14A (lower-side fixing pins 14B) for fixing the upper plate spring 6 (lower plate spring 7) to the module frame 5, and hence, the shape of the through-hole 6B (7B) can be away from the spring portion 6E (7E). Therefore, production by precise punching and production by etching can be performed easily.

As illustrated in FIG. 2, the module lower plate 8 is used for stacking the lower plate spring 7 by sandwiching the lower plate spring 7 between the module lower plate 8 and the module frame 5 from the lower side while the respective lower-side fixing pins 14B of the module frame 5 are inserted in the through-holes 7B of the lower plate spring 7 and the respective lower-side fixing pins 13B of the lens frame 4 housed in the module frame 5 are inserted in the through-holes 7A of the lower plate spring 7, and fixing the outer frame in a rectangular shape of the lower plate spring 7 to the end surface 5b of the module frame 5 in a pressed state.

As illustrated in FIGS. 9(a) and 10, the module lower plate 8 is a plate member having a rectangular outer shape substantially similar to the outer shape of the module frame 5, and an opening 8A in a substantially circular shape with respect to the axis M is formed through the center portion of the module lower plate 8 in the thickness direction. Then, at a time of assembly, four U-shaped concave portions 8B for avoiding the interference with a caulking portion described later are formed at positions corresponding to the arrangement positions of the respective lower-side fixing pins 13B of the lens frame 4 on the upper surface 8a side to be stacked on the lower plate spring 7.

Further, at the respective corners positioned at a circumferential edge of the module lower plate 8, through-holes 8C allowing the lower-side fixing pins 14B to be inserted therethrough are formed correspondingly to the arrangement positions of the respective lower-side fixing pins 14B of the module frame 5.

Further, as illustrated in FIGS. 9(b) and 10, a wall portion 8D protruding downward along the opening 8A is formed on a lower surface 8b of the module lower plate 8. In this embodiment, the distance between the upper surface 8a and the lower surface 8b is set at h1, and the distance between the upper surface 8a and the end surface 8c of the wall portion 8D is set at h2 (where h1<h2) . The end surface 8c of the wall portion 8D constitutes an attachment surface to be brought into contact with the substrate 2. Herein, the distance h2 is set to be such a height as to protrude downward from a caulking portion when the feeding member 9 is caulked to the lower surface 8b.

Further, the wall portion 8D has a function of a positioning spacer that performs positioning in the axis M direction, i.e., in the optical axis direction with respect to the substrate 2 by setting the distance h2 appropriately.

In this embodiment, as the material for the module lower plate 8, a synthetic resin having an electric insulating property and a light-shielding property is adopted.

Therefore, as illustrated in FIG. 5(a), the wall portion 8D has a function of a light-shielding material that shields the periphery of the image pickup element 30 from light by covering the image pickup element 30 provided on the substrate 2 from a side.

Further, due to the electric insulating property, the module lower plate 8 functions as an insulating member that fixes the feeding member 9 to the lower plate spring 7 in an electrically insulated state. Further, the module lower plate 8 also functions as an insulating member that keeps an electrically insulated state with respect to the substrate 2 which the end surface 8c abuts against.

As illustrated in FIG. 11, the feeding member 9 includes a pair of electrodes 9a, 9b respectively made of a plate-shaped metal plate in this embodiment.

The electrodes 9a, 9b are formed of a bent line shaped metal plate having a wiring portion 9B in a substantially L-shape along the outer shape of the module lower plate 8 and terminal portions 9C protruding to the outer side of the outer shape of the module lower plate 8 from the end of the wiring portion. Each wiring portion 9B is provided with two through-holes 9A for positioning the electrodes 9a, 9b with respect to the module frame 5 by inserting two lower-side fixing pins 14B adjacent to each other along the outer shape of the module lower plate 8 of the lower-side fixing pins 14B of the module frame 5 protruding downward from the lower surface 8b of the module lower plate 8.

In this embodiment, as illustrated in FIG. 3, the terminal portions 9C of the electrodes 9a, 9b are provided in the module frame 5 so as to protrude in parallel outward in the radial direction from the side surface on which the wire holding member 15A is attached.

Therefore, the electrode 9a is providedwi th a conductive connecting portion 9D that is cut away in a concave shape so as to electrically connect the terminal portions 15a of the wire holding member 15A to the side surface on the wiring portions 9B between the through-holes 9A and the terminal portions 9C.

Further, the electrode 9b is provided with a conductive connecting portion 9D that is cut away in a concave shape so as to electrically connect the terminal portions 15a of the wire holding member 15B to the side surface on the wiring portions 9B between two through-holes 9A.

As means for electrically connecting the respective conductive connecting portions 9D to the terminal portions 15a, for example, adhesion through soldering or a conductive adhesive can be adopted.

As illustrated in FIGS. 2, 4, and 12, the cover 11 is a member in which a side wall portion 11D covering the module frame 5 from an outside of the module frame extends downward from an outer edge of an upper surface 11E, an opening 11C in a rectangular shape is formed on a lower side, and a circular opening 11A with the axis M being the center is provided at the center of the upper surface 11E. The size of the opening 11A is designed so that the lens unit 12 can be taken in or out.

Further, as illustrated in FIG. 12, four U-shaped concave portions 11B (run-off) for avoiding the interference with the caulking portion 16 described later are formed at the positions corresponding to the arrangement positions of the respective upper-side fixing pins 13A of the lens frame 4 in the circumferential direction of the opening 11A on the back surface side of the upper surface 11E.

The depth of the concave portion 11B is set so that the caulking portion 16 and the cover 11 do not come into contact with each other even at a position where the positioning surface 4E1 and the reception surface 5E1 abut against each other. The concave portion 11B may be concave portion protruding upward. However, in this embodiment, the thickness of the concave portion 11B is set to be small, and the concave portion 11B is formed within the range of the thickness of the cover 11, whereby the outer surface of the upper surface 11E is set to be a flat surface.

The method of assembling the driving module 1 with such a configuration is described successively. In a first step, first, the lens frame 4 is inserted in the housing portion 5A of the module frame 5 from a lower side, whereby each end surface 5a of the module frame 5 and the end surface 4a of the lens frame 4 are aligned to the same height. Then, the upper-side fixing pins 14A of the module frame 5 and the upper-side fixing pins 13A of the lens frame 4 are inserted in the respective through-holes 6A, 6B of the upper plate spring 6.

After that, the tip ends of the upper-side fixing pins 14A, 13A that protrude upward through the through-holes 6A, 6B of the upper plate spring 6 are caulked with heat by a heater chip (not shown), whereby the caulking portion 16 which is a first fixing portion and the caulking portion 17 which is a second fixing portion are formed (see FIGS. 3 and 4).

At this time, the end surface 4a of the lens frame 4 and the end surfaces 5a of the module frame 5 are aligned to the same plane. The flat-plate-shaped upper plate spring 6 can be placed without being deformed, and caulking with heat can be performed. Therefore, it is not necessary to press the upper plate spring 6 to be deformed, which makes it easy to perform caulking. Further, the floating caused by the deformation of the upper plate spring 6 can be prevented.

Further, the height of each heater chip can be set to be the same, and hence, the variation in caulking precision can be reduced even when the caulking portions 16, 17 are formed simultaneously.

Next, in a second step, the lower-side fixing pins 13B of the lens frame 4 are inserted respectively in the through-holes 7A of the lower plate spring 7. At this time, the lower-side fixing pins 14B of the module frame 5 are simultaneously inserted in the through-holes 7B of the lower plate spring 7, the through-holes 8C of the module lower plate 8, and the through-holes 9A of the feeding member 9. After that, the tip ends of the lower-side fixing pins 13B that protrude downward through the through-holes 7A of the lower plate spring 7 are caulked with heat by a heater chip, whereby caulking portions 18 which are first fixing portions (see FIG. 4) are formed.

At this time, an axial distance between the end surfaces 4a, 4b of the lens frame 4 and an axial distance between the end surfaces 5a, 5b of the module frame 5 are equal, and hence the end surfaces 4b, 5b are aligned to the same plane. The flat-plate-shaped lower plate spring 7 can be stacked and placed on the module lower plate 8 without being deformed, and caulking with heat can be performed. Therefore, the floating caused by the deformation of the lower plate spring 7 can be prevented. Further, the height of each heater chip can be set to be the same, and hence, the variation in caulking precision can be reduced even when the caulking portions 18 are formed simultaneously.

Next, in a third step, the lower ends of the lower-side fixing pins 14B that protrude downward through the through-holes 7B, 8C, and 9A are caulked with heat by a heater chip, whereby caulking portions 19 which are second fixing portions (see FIG. 4) are formed.

At the time, the height of each heater chip can be set to be the same, and hence, the variation in caulking precision can be reduced even when the caulking portions 19 are formed simultaneously.

Further, the concave portions 8B are formed in the module lower plate 8, and hence the caulking portions 18 formed in the second step do not come into contact with the module lower plate 8.

By performing the operations in the first to third steps, the upper plate spring 6, the lower plate spring 7, the module lower plate 8, and the feeding member 9 are stacked and fixed to both ends of the lens frame 4 and the module frame 5.

In this embodiment, the upper-side fixing pins 13A and the lower-side fixing pins 13B, and the upper-side fixing pins 14A and the lower-side fixing pins 14B are provided respectively coaxially, and hence, in the caulking in the first to third steps, the positions on a plane of the heater chips for forming the caulking portions 16, 18 and the caulking portions 17, 19 become common, respectively. Therefore, it is not necessary to change the position of a heater chip in each caulking, which enables a caulking operation to be performed efficiently.

By caulking the plate spring member with heat as described above, the plate spring member can be sandwiched and fixed between the support and the body to be driven by the caulking portions. Thus, a period of time required for hardening is shorter compared with the case of fixing by adhesion or the like, and hence, an assembly time can be reduced. Further, there is no fear that components are contaminated due to the generation of gas. Further, sequentially stable fixing can be performed. Consequently, the reliability of a fixed portion can be enhanced.

Further, a simple configuration with the number of components reduced is achieved because fixing components such as screws are not used, which enables more reduction in weight and miniaturization. In particular, the lens frame 4 that is a body to be driven is reduced in weight, and hence the driving at high speed with low power consumption can be performed.

Next, in a fourth step, a pair of wire holding members 15A, 15B provided with the SMA wire 10 attached to tip ends thereof are locked respectively with locking grooves 5C at two places of the module frame 5, whereby the wire holding members 15A, 15B are held and fixed to the module frame 5 by means such as fitting or adhesion. At this time, the center of the SMA wire 10 is locked with the tip end key portion 4D1 of the guide protrusion 4D and placed across so as to support the tip end key portion 4D1 from a lower side.

At this time, the terminal portions 15a of the wire holding members 15A, 15B protrude to a lower side of the module lower plate 8 and are respectively locked with the conductive connecting portions 9D of the electrodes 9a, 9b that are the feeding member 9 fixed to the module lower plate 8, or placed in the vicinity thereof.

The terminal portions 15a are electrically connected to the conductive connecting portions 9D using, for example, soldering or a conductive adhesive.

Next, in a fifth step, the cover 11 is placed on the module frame 5 from above, thereby connecting the side wall portion 11D to the module lower plate 8. For example, an engagement hook or the like is provided at the side wall portion 11D, and the side wall portion 11D is connected to the module lower plate 8 by fitting. Alternatively, the side wall portion 11D and the module lower plate 8 are connected to each other by adhesion or welding.

At this time, the caulking portions 16, 17 are respectively away from the back surface of the upper surface 11E of the cover 11.

The assembly of a main body of the driving module 1 is completed.

Next, in a sixth step, the driving module 1 is attached to the substrate 2 with the terminal portions 9C of the driving module 1 being positioned with respect to the land portions 3 on the substrate 2 (see FIG. 1). Then, the terminal portions 9C are electrically connected to the land portions 3 by means such as soldering or a conductive adhesive. At this time, the caulking portions 19 have a height lower than that of the wall portion 8D of the module lower plate 8, and hence, is away from the substrate 2.

As the attachment of the driving module 1 to the substrate 2, fixing means such as adhesion and fitting can be adopted.

The substrate 2 may be an independent member belonging to the driving module 1, or a member connected to and placed at an electronic apparatus or the like.

Next, in a seventh step, the lens unit 12 is screwed and fixed in the lens frame 4 through the opening 11A of the cover 11.

The reason why the lens unit 12 is attached finally is to prevent the lens of the lens unit 12 from being contaminated or to prevent dust and the like from adhering to the lens during an assembly operation. For example, in the case where the driving module 1 is shipped in a product state with the lens unit 12 attached thereto, and the case where the opening 11A of the cover 11 is desired to be smaller than the outer shape of the lens unit 12, for example, the opening 11A is also used as a diaphragm, the seventh step may be performed in the middle of the fifth step or the sixth step.

Next, the operation of the driving module 1 is described.

In a state of the driving module 1 in which power is not supplied to the terminal portions 9C, the forces acting on the lens frame 4, such as the tension from the SMA wire 10 and the biasing force that elastically biases the caulking portions 16, 18 from the upper plate spring 6 and the lower plate spring 7, are balanced, and as illustrated in FIG. 5(a), the lens frame 4 with the lens unit 12 attached thereto is held at a constant position in the axial direction.

When power is supplied from the terminal portions 9C to the feeding member 9, for example, the electrodes 9a, the wire holding member 15A, the SMA wire 10, the wire holding portion 15b, and the electrodes 9b are brought into conduction, and hence, a current flows through the SMA wire 10. When Joule heat is generated in the SMA wire 10 and the temperature of the SMA wire 10 is raised to exceed the transformation start temperature of the SMA wire 10, the SMA wire contracts to the length in accordance with the temperature.

Consequently, the guide protrusion 4D of the lens frame 4 moves upward ((Z1) direction in the figure). Thus, the upper plate spring 6 and the lower plate spring 7 are respectively deformed, and an elastic recovery force in accordance with the deformed amount biases the lens frame 4. Then, the lens frame 4 stops at a position where the elastic recovery force and the tension of the SMA wire 10 are balanced.

At this time, in this embodiment, the upper plate spring 6 and the lower plate spring 7 constitute parallel springs, and hence, the lens frame 4 is moved along the axis M precisely even without being placed along the guide member in the axial direction. Therefore, it is possible to reduce the number of components, and to achieve miniaturization. Further, a sliding burden with respect to the guide member does not occur, and hence, lower power consumption can be realized.

Further, when the supply of power is stopped, the SMA wire 10 can expand, and the lens frame 4 moves to a balanced position in a lower portion ((Z2) direction in the figure).

Thus, the lens frame 4 can be driven in the direction of the axis M by controlling the supply amount of power.

Further, in the case where the SMA 10 contracts excessively to increase the movement amount of the lens frame 4 excessively at a time of some abnormality, for example, at a time of receiving impact force from dropping or instability of power control, due to the presence of the positioning portion 4E and the positioning reception portion 5E in this embodiment, the position of the lens frame 4 is regulated to a predetermined limit value. Therefore, the lens frame 4 can be prevented from bumping against the cover 11, and the upper plate spring 6 and the lower plate spring 7 can be prevented from being deformed beyond a deformation limit. Thus, reliability can be enhanced.

According to the driving module 1 in this embodiment, the positions in the radial direction of the caulking portions 16, 18 and the caulking portions 17, 19, which fix the upper-side fixing pins 13A, the lower-side fixing pins 13B, the upper-side fixing pins 14A, and the lower-side fixing pins 14B to the lens frame 4 and the module frame 5 by sandwiching them, can be close to each other. Therefore, the risks of breakage and failures due to impact force caused by dropping or the like can be reduced, and the miniaturization can be achieved.

Next, modifications of this embodiment are described.

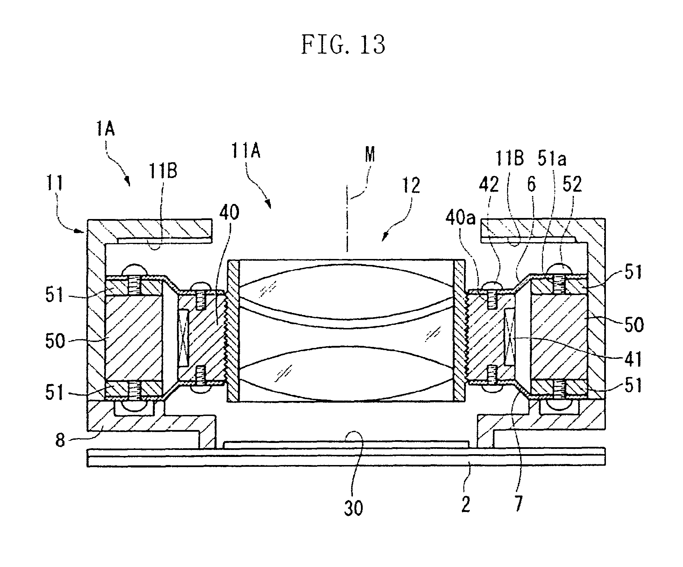

FIG. 13 is a schematic cross-sectional view illustrating a configuration of a driving module according to a modification of Embodiment 1 of the present invention. In order to illustrate a cross-section including screws 42, 52 described later, the cross-section taken along a bent cross-sectional line similar to the line A-A in FIG. 3 is illustrated.

As illustrated in FIG. 13, the driving module 1A of the modification includes voice coil type driving means using the driving coil 41 and the magnet 50 in place of the driving means using the SMA wire 10 of Embodiment 1, and the screws 42 (first fixing portions) and the screws 52 (second fixing potions) in place of the caulking portions 16, 18 and the caulking portions 17, 19.

Hereinafter, the difference from Embodiment 1 is mainly described.

The driving coil 41 is provided in an outer circumferential portion of the cylindrical lens frame 40 (body to be driven) with the lens unit 12 screwed in the inner circumferential side.

On an end surface in the axial direction of the lens frame 40, female screw portions 40a allowing the screws 42 to be screwed therewith are provided at the positions similar to those of the upper-side fixing pins 13A and the lower-side fixing pins 13B in Embodiment 1.

The magnet 50 is formed in a cylindrical shape accommodating the lens frame 40 in an inner circumferential portion, and plate spring attachment portions 51 are respectively fixed to the cylinder end portions. In the plate spring attachment portions 51, female screw portions 51a allowing screws 52 to be screwed therewith are provided at the positions similar to those of the upper-side fixing pins 14A and the lower-side fixing pins 14B of Embodiment 1. The magnet 50 wi th the plate spring attachment portions 51 fixed thereto constitutes a cylindrical support accommodating the body to be driven inside.

Each of the lower-side plate spring attachment portions 51 is fixed to the module lower plate 8 provided below through appropriate means such as screwing or adhesion in the circumferential direction (not shown).

Further, the upper plate spring 6 and the lower plate spring 7 are fixed to the lens frame 40 and the plate spring attachment portions 51 to be sandwiched between them and the screws 42, 52.

According to the driving module 1A having the above-mentioned configuration, similarly to the driving module 1 according to Embodiment 1, the positions in the radial direction of the screws 42 and the screws 52 placed close to each other. Therefore, the risks of breakage and failures due to impact force caused by dropping or the like can be reduced, and the miniaturization can be achieved.

### [Embodiment 2]

Next, an electronic apparatus according to Embodiment 2 of the present invention is described.

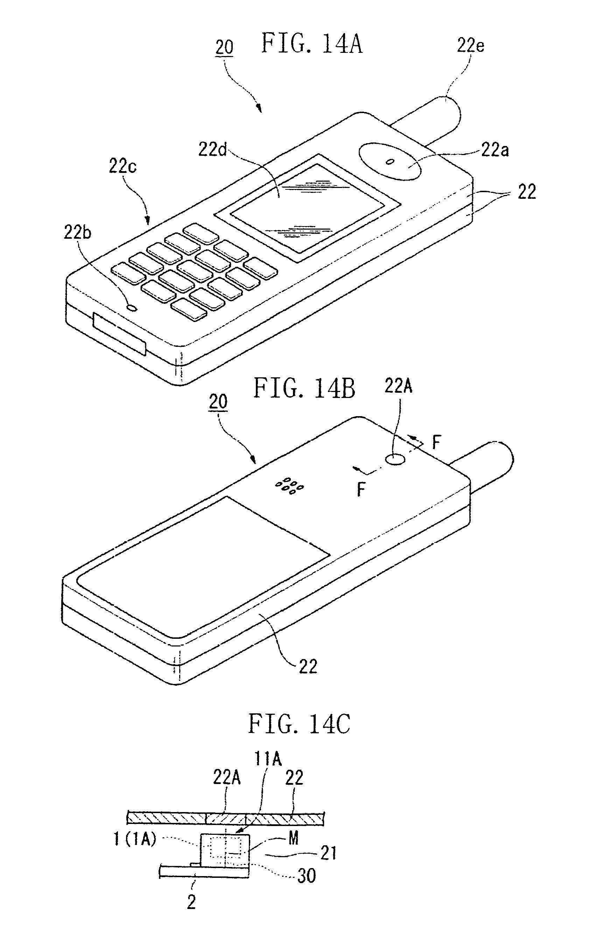

FIGS. 14(a) and 14(b) are external perspective views of a front surface and a back surface of an electronic apparatus according to Embodiment 2 of the present invention. FIG. 14(c) is a cross-sectional view taken along the line F-F of FIG. 14(b).

A mobile phone 20 with a camera in this embodiment illustrated in FIGS. 14 (a) and 14(b) is an example of an electronic apparatus having the driving module 1 according to Embodiment 1 and further the driving module 1A according to the modification.

The mobile phone 20 with a camera includes well-known apparatus configurations of a mobile phone such as a receiving portion 22a, a sending portion 22b, an operation portion 22c, a liquid crystal display portion 22d, an antenna portion 22e, and a control circuit portion (not shown) inside and outside of covers 22.

Then, as illustrated in FIG. 14 (b), a window 22A transmitting ambient light is provided in the cover 22 on a back surface of the side on which the liquid crystal display portion 22d is provided. As illustrated in FIG. 14(c), the driving module 1 (1A) of Embodiment 1 is set so that the opening 11A of the driving module 1 (1A) faces the window 22A of the cover 22, and the axis M is placed along the normal direction of the window 22A.

Then, the driving module 1 is mechanically and electrically connected to the substrate 2.

The substrate 2 is connected to the control circuit portion (not shown) so as to supply power to the driving module 1.

According to such a configuration, light transmitted through the window 22A is collected at the lens unit 12 (not shown) of the driving module 1 (1A) and can form an image on the image pickup element 30. Then, power is supplied appropriately from the control circuit portion to the driving module 1, whereby a focus position is adjusted by driving the lens unit 12 in the direction of the axis M to perform photographing.

Due to the presence of the driving module 1 (1A) of Embodiment 1, the mobile phone 20 with a camera can be miniaturized and produced easily, and hence, high reliability can be ensured even in the case of dropping the mobile phone 20.

In the above description, the case of using an SMA wire for the driving means, and the case of using the voice coil type drivingmeans utilizing the driving coil and the magnet are described. However, the driving means is not limited thereto as long as it drives the body to be driven in a predetermined direction with respect to the support. For example, driving means such as a linear motor can be adopted.

Further, the description of Embodiment 1, the case is described in which the upper-side fixing pins 13A, 14A, and the lower-side fixing pins 13B, 14B are inserted in the upper plate spring 6 and the lower plate spring 7 that are plate spring members for biasing the support, and tip ends of the fixing pins are caulked with heat. However, the method of fixing the plate spring members is not limited thereto. For example, the plate spring members may be fixed by ultrasonic caulking, or the plate spring member may be adhered to the body to be driven or the support. According to the present structure, a large adhesion area can be ensured, and hence, large strength can be obtained even using an adhesive.

Further, in the above description, the module frame 5 is a member generally formed into a substantially rectangular shape. However, the module frame 5 may have a polygonal shape without being limited to a substantially rectangular shape. In this case, a rectangular corner can be replaced by a polygonal corner.

Further, in the above description, the case where the driving module is used in a focus position adjusting mechanism of a lens unit is exemplified. However, the use of the driving module is not limited thereto. For example, the driving module may be used in another portion as an appropriate actuator that moves a body to be driven to a target position. For example, the driving module can be used as an appropriate actuator by screwing a rod member or the like in place of the lens unit 12 or changing the lens frame 4 to another shape. More specifically, the body to be driven may include a columnar member without being limited to a tubular member.

Further, in the above description, the electronic apparatus using the driving module is described in an example of a mobile phone with a camera. However, the kind of the electronic apparatus is not limited thereto. For example, the driving module may be used in an optical apparatus such as a digital camera or a camera built in a personal computer, or used as an actuator that moves a body to be driven to a target position in an electronic apparatus such as an information reading storage device and a printer.

Further, the components in each embodiment described above may be combined appropriately within the technical concept of the present invention, if possible technically.

## Claims

1. A driving module, comprising:
a cylindrical or columnar body (4) to be driven;
a cylindrical support comprising a housing portion (5) for housing the body to be driven in an inside thereof;
a plate spring member (6, 7) that holds elastically the body to be driven with respect to the support so that the body to be driven is movable in a predetermined direction; and
driving means (10, 41) for driving the body to be driven in the predetermined direction against a biasing force of the plate spring member, wherein:
the body to be driven is provided with, in a cylinder end portion or a column end portion of the body to be driven in a circumferential direction, a plurality of first plate spring fixing portions (13A, 13B) that sandwich the plate spring member (6) with the body to be driven so as to fix the plate spring member to the body to be driven;
the support is provided with, in a cylinder end portion of the support in the circumferential direction, a plurality of second plate spring fixing portions (14A, 14B) that sandwich the plate spring member (7) with the support so as to fix the plate spring member to the support; and
the first plate spring fixing portions are circumferentially displaced from the second plate spring fixing portions, the circumferential displacement being in a plane orthogonal to the center axis of the body to be driven;
**characterized in that**:
each of the first plate spring fixing portions is housed in a concave portion of the housing portion, the concave portion being outwardly concave in a radial direction with respect to the center axis.(M).

2. A driving module according to claim 1, wherein an outer circumferential portion of the support is formed in a polygonal shape, and each of the second plate spring fixing portions is provided in a corner of a polygon of the support.

3. A driving module according to claim 2, wherein:
the driving means comprises a shape memory alloy wire (10) that is stretched across the outer circumferential portion of the support and drives the body to be driven against the biasing force of the plate spring member;
the body to be driven comprises a protrusion (4D1) that locks the shape memory alloy wire;
the support is provided with a protrusion insertion portion (5B) that allows the protrusion to be inserted in the corner of the polygon in a radial direction and to move in the predetermined direction; and
each of the second plate spring fixing portions (14A, 14B) in the corner in which the protrusion insertion portion is formed is placed adjacent to the protrusion insertion portion in the circumferential direction.

4. A driving module according many one of claims 1 to 3, wherein:
the body to be driven (4) comprises a convex portion (4E) that protrudes in the radial direction in an outer circumferential portion of a cylindrical or columnar main part of the body to be driven; and
each of the first plate spring fixing portions (13A, 13B) is formed on an end side of the convex portion.

5. A driving module according to any one of claims 1 to 4, wherein:
an inner circumferential surface (5A) of the support is provided with a position regulating portion (5E1) that regulates a movement range of the body to be driven in the predetermined direction; and
the outer circumferential portion of the body to be driven is provided with a portion (4E1) whose position is to be regulated, and which is placed so as to abut against the position regulating portion of the support.

6. A driving module according to claim 5, wherein:
the position regulating portion (5E1) of the support is provided on an inner side in the radial direction with respect to the second plate spring fixing portions (14A, 14B); and
the portion (4E1) whose position is to be regulated of the body to be driven (4) is formed at a position adjacent to each of the first plate spring fixing portions (13A, 13B) in the circumferential direction.

7. A driving module according to any one of claims 1 to 6, comprising a cover member (11) that covers the support at least on the second plate spring fixing portions (14A, 14B),
wherein the cover member is provided with a run-off (11B) in a concave shape in a plate thickness range of the cover member at a position opposed to each of the second plate spring fixing portions.

8. An electronic apparatus comprising the driving module according to any one of claims 1 to 7.

## Patentansprüche

1. Antriebsmodul, umfassend:
einen anzutreibenden, zylindrischen oder säulenförmigen Körper (4);
eine zylindrische Stütze, umfassend einen Gehäuseabschnitt (5) zum Aufnehmen des anzutreibenden Körpers im seinem Inneren;
ein Tellerfederelement (6, 7), das den anzutreibenden Körper in Bezug auf die Stütze elastisch hält, so dass der anzutreibende Körper in eine vorbestimmte Richtung bewegbar ist; und
ein Antriebsmittel (10, 41) zum Antreiben des anzutreibenden Körpers in die vorbestimmte Richtung gegen eine Spannkraft des Tellerfederelements, wobei:
der anzutreibende Körper in einem Zylinderendabschnitt oder einem Säulenendabschnitt des anzutreibenden Körpers in Umfangsrichtung mit mehreren ersten Tellerfederbefestigungsabschnitten (13A, 13B) versehen ist, die das Tellerfederelement (6) mit dem anzutreibenden Körper verbinden, so dass das Tellerfederelement an dem anzutreibenden Körper befestigt ist;
die Stütze in einem Zylinderendabschnitt der Stütze in Umfangsrichtung mit mehreren zweiten Tellerfederbefestigungsabschnitten (14A, 14B) versehen ist, die das Tellerfederelement (7) mit der Stütze verbinden, so dass das Tellerfederelement an der Stütze befestigt ist; und
die ersten Tellerfederbefestigungsabschnitte um den Umfang von den zweiten Tellerfederbefestigungsabschnitten versetzt sind,
wobei die Versetzung in Umfangsrichtung in einer Ebene orthogonal zur Mittelachse des anzutreibenden Körpers ist;
**dadurch gekennzeichnet, dass**
jeder der ersten Tellerfederbefestigungsabschnitte in einem konkaven Abschnitt des Gehäuseabschnitts aufgenommen ist, wobei der konkave Abschnitt in eine radiale Richtung in Bezug auf die Mittelachse (M) nach außen konkav ist.

2. Antriebsmodul nach Anspruch 1, wobei ein Außenumfangsabschnitt der Stütze in einer polygonalen Form gebildet ist und jeder der zweiten Tellerfederbefestigungsabschnitte in einer Ecke eines Vielecks der Stütze vorgesehen ist.

3. Antriebsmodul nach Anspruch 2, wobei:
das Antriebsmittel einen Formgedächtnislegierungsdraht (10) umfasst, der über den Außenumfangsabschnitt der Stütze gedehnt ist und den anzutreibenden Körper gegen die Spannkraft des Tellerfederelements antreibt;
der anzutreibende Körper einen Fortsatz (4D1) umfasst, der den Formgedächtnislegierungsdraht verriegelt;
die Stütze mit einem Fortsatzeinsetzabschnitt (5B) versehen ist, der ein Einsetzen des Fortsatzes in die Ecke des Vielecks in einer radialen Richtung sowie die Bewegung in die vorbestimmte Richtung ermöglicht; und jeder der zweiten Tellerfederbefestigungsabschnitte (14A, 14B) in der Ecke, in der der Fortsatzeinsetzabschnitt gebildet ist, neben dem Fortsatzeinsetzabschnitt in Umfangsrichtung angeordnet ist.

4. Antriebsmodul nach einem der Ansprüche 1 bis 3, wobei:
der anzutreibende Körper (4) einen konvexen Abschnitt (4E) umfasst, der in die radiale Richtung in einem Außenumfangsabschnitt eines zylindrischen oder säulenförmigen Hauptteils des anzutreibenden Körpers absteht; und
jeder der ersten Tellerfederbefestigungsabschnitte (13A, 13B) an einer Stirnseite des konvexen Abschnitts gebildet ist.

5. Antriebsmodul nach einem der Ansprüche 1 bis 4, wobei:
eine innere Umfangsfläche (5A) der Stütze mit einem Positionsregulierungsabschnitt (5E1) versehen ist, der einen Bewegungsbereich des anzutreibenden Körpers in die vorbestimmte Richtung reguliert; und
der Außenumfangsabschnitt des anzutreibenden Körpers mit einem Abschnitt (4E1) versehen ist, dessen Position zu regulieren ist und der so angeordnet ist, dass er gegen den Positionsregulierungsabschnitt der Stütze liegt.

6. Antriebsmodul nach Anspruch 5, wobei:
der Positionsregulierungsabschnitt (5E1) an einer Innenseite in radialer Richtung in Bezug auf die zweiten Tellerfederbefestigungsabschnitte (14A, 14B) vorgesehen ist; und
der Abschnitt (4E1), dessen Position zu regulieren ist, des anzutreibenden Körpers (4) an einer Position neben jedem der ersten Tellerfederbefestigungsabschnitte (13A, 13B) in Umfangsrichtung gebildet ist.

7. Antriebsmodul nach einem der Ansprüche 1 bis 6, umfassend ein Abdeckelement (11), das die Stütze zumindest an den zweiten Tellerfederbefestigungsabschnitten (14A, 14B) bedeckt,
wobei das Abdeckelement mit einem Ablauf (11B) in konkaver Form in einem Plattendickenbereich des Abdeckelements an einer Position gegenüber jedem der zweiten Tellerfederbefestigungsabschnitte versehen ist.

8. Elektronische Vorrichtung, umfassend das Antriebsmodul nach einem der Ansprüche 1 bis 7.

## Revendications

1. Module d'entraînement, comprenant :
un corps cylindrique ou en colonne (4) à entraîner ;
un support cylindrique comprenant une partie de logement (5) pour loger le corps à entraîner à l'intérieur de celle-ci ;
un élément de ressort à lames (6, 7) qui maintient élastiquement le corps à entraîner par rapport au support de manière à ce que le corps à entraîner soit mobile dans une direction prédéterminée ; et
un moyen d'entraînement (10, 41) pour entraîner le corps à entraîner dans la direction prédéterminée à l'encontre d'une force d'inclinaison de l'élément de ressort à lames ; dans lequel :
le corps à entraîner est muni, dans une partie d'extrémité cylindrique ou une partie d'extrémité en colonne du corps à entraîner dans une direction circonférentielle, d'une pluralité de premières parties de de fixation de ressort à lames (13A, 13B) prenant en sandwich l'élément de ressort à lames (6) avec le corps à entraîner de manière à fixer l'élément de ressort à lames sur le corps à entraîner ;
le support étant muni, dans une partie d'extrémité cylindrique du support dans la direction circonférentielle, d'une pluralité de deuxièmes parties de fixation de ressort à lames (14A, 14B) prenant en sandwich l'élément de ressort à lames (7) avec le support de manière à fixer l'élément de ressort à lames sur le support ; et
les premières parties de fixation de ressort à lames étant déplacées circonférentiellement par rapport aux deuxièmes parties de fixation de ressort à lames, le déplacement circonférentiel étant dans un plan orthogonal à l'axe de centre du corps à entraîner ;
**caractérisé en ce que** :
chacune des premières parties de fixation de ressort à lames est logée dans une partie concave de la partie de logement, la partie concave étant concave vers l'extérieur dans une direction radiale par rapport à l'axe de centre (M).

2. Module d'entraînement selon la revendication 1, dans lequel une partie circonférentielle extérieure du support est formée avec une forme polygonale, et chacune des deuxièmes parties de fixation de ressort à lames étant fournie dans un angle d'un polygone du support.

3. Module d'entraînement selon la revendication 2, dans lequel :
le moyen d'entraînement comprend un fil d'alliage à mémoire de forme (10) qui est étiré sur la partie circonférentielle extérieure du support et entraîne le corps à entraîner à l'encontre de la force d'inclinaison de l'élément de ressort à lames ;
le corps à entraîner comprenant une protubérance (4D1) qui verrouille le fil d'alliage à mémoire de forme ;
le support étant muni d'une partie d'insertion de protubérance (5B) qui permet à la protubérance d'être insérée dans l'angle du polygone dans une direction radiale et de bouger dans la direction prédéterminée ;
et
chacune des deuxièmes parties de fixation du ressort à lames (14A, 14B) dans l'angle dans lequel la partie d'insertion de protubérance est formée étant placée de manière adjacente à la partie d'insertion de protubérance en direction circonférentielle.

4. Module d'entraînement selon l'une quelconque des revendications 1 à 3, dans lequel :
le corps à entraîner (4) comprend une partie convexe (4E) qui dépasse dans la direction radiale dans une partie circonférentielle extérieure d'un organe principal cylindrique ou en colonne du corps à entraîner ; et
chacune des premières parties de fixation de ressort à lames (13A, 13B) étant formée sur un côté d'extrémité de la partie convexe.

5. Module d'entraînement selon l'une quelconque des revendications 1 à 4, dans lequel :
une surface circonférentielle intérieure (5A) du support est munie d'une partie de régulation de position (5E1) qui régule une plage de déplacement du corps à entraîner dans la direction prédéterminée ; et
la partie circonférentielle extérieure du corps à entraîner étant munie d'une partie (4E1) dont la position doit être régulée, et qui est placée de manière à buter contre la partie de régulation de position du support.

6. Module d'entraînement selon la revendication 5, dans lequel :
la partie de régulation de position (5E1) du support est fournie sur un côté intérieur dans la direction radiale par rapport aux deuxièmes parties de fixation du ressort à lames (14A, 14B) ; et
la partie (4E1) dont la position doit être régulée du corps à entraîner (4) étant formée dans une position adjacente à chacune des premières parties de fixation du ressort à lames (13A, 13B) en direction circonférentielle.

7. Module d'entraînement selon l'une quelconque des revendications 1 à 6, comprenant un élément de couvercle (11) qui recouvre le support au moins sur les deuxièmes parties de fixation de ressort à lames (14A, 14B),
dans lequel l'élément de couvercle est muni d'un écoulement (11B) d'une forme concave dans une plage d'épaisseur de plaque de l'élément de couvercle dans une position opposée à chacune des deuxièmes parties de fixation du ressort à lames.

8. Appareil électronique comprenant le module d'entraînement selon l'une quelconque des revendications 1 à 7.
